# EUROPÄISCHE PATENTSCHRIFT

(11) **EP 0 799 669 B1**
(45) Veröffentlichungstag und Bekanntmachung des Hinweises auf die Patenterteilung: **07.01.1999**
(21) Anmeldenummer: 97104219.7
(22) Anmeldetag: 13.03.1997
(51) Int. Cl.: B23P 25/00, B23B 25/00

(54) **Verfahren und Vorrichtung zum Feindrehen eines Werkstückes aus einem härtbaren Stahl**
Method and device for finish turning a work of hardenable steel
Méthode et dispositif pour tourner à précision une pièce en acier durcissable

(30) Priorität: 02.04.1996 DE 19613183
(43) Veröffentlichungstag der Anmeldung: 08.10.1997
(73) Patentinhaber: DAIMLER-BENZ AKTIENGESELLSCHAFT, 70567 Stuttgart (DE)
(72) Erfinder: Golz, Ulrich, Dr., 89278 Nersingen (DE); Linden, Peter, Dr., 89179 Beimerstetten (DE); Liu, Xiaoyi, Dr., 89073 Ulm (DE); Merkel, Matthias, 76473 Iffezheim (DE); Müller-Hummel, Peter, 89275 Elchingen-Thalfingen (DE)

(56) Entgegenhaltungen:
- DE-C- 4 233 035
- GB-A- 2 012 646

## Beschreibung

Die Erfindung betrifft ein Verfahren und eine Vorrichtung zum Feindrehen eines Werkstückes aus einem härtbaren Stahl mittels Spanmeißel nach dem Oberbegriff von Anspruch 1, bzw. 3.

Aufgrund der heute für das Zerspanen von Werkstoffen zur Verfügung stehenden, harten Schneidwerkstoffe können z.T. auch sehr harte werkstückseitige Werkstoffe durch Drehen zerspant und bei ungehärteten Werkstoffen sehr hohe Schnittgeschwindigkeiten zugelassen werden. Beim Feindrehen von Werkstücken kann im Gegensatz zum Schleifen in vielen Fällen auf Kühlschmierstoffe verzichtet werden und es können dennoch die geforderten hohen Oberflächenqualitäten eingehalten werden. Auch aus energetischer Sicht zeigt das Feindrehen aufgrund der definierten Schneidengeometrie Vorteile gegenüber dem Schleifen. Wegen der erwähnten hochbelastbaren Schneidstoffe ist man deshalb auch schon dazu übergegangen, Werkstücke im Bereich gehärteter Oberflächenpartien feinzudrehen - sog. Hartfeindrehen. Nachteilig an der Feinbearbeitung von gehärteten Werkstückoberflächen - sei es durch Schleifen, sei es durch Feindrehen - ist, daß dadurch zerspanungsbedingt eine bestimmte Wärmemenge relativ rasch in das Werkstück eingetragen wird, die zur Vermeidung einer unkontrollierten, thermisch bedingten Gefügeumwandlung der oberflächennah liegenden gehärteten Werkstofflagen laufend nach außen durch reichlich zugeführte Kühlflüssigkeit wieder abgeführt werden muß. Und zwar käme es beim Unterlassen einer Fremdkühlung aufgrund des zerspanungsbedingten Wärmeeintrages in die Werkstückoberfläche zu einem oberflächennahen Wärmestau und dadurch zu einer unkontrollierten Anlaßwirkung, die die gewünschte Oberflächenhärte reduziert. Nachteilig an einer Fremdkühlung ist zum einen, daß für die Aufrechterhaltung eines solchen Kühlflüssigkeitskreislaufes und für die Regeneration der zirkulierten Kühlflüssigkeit erhebliche Investitionen zu tätigen sind, weshalb man gerne ohne Kühlflüssigkeit auskommen würde. Es kommt hinzu, daß von den mit verschiedenen Additiven versehenen Kühlflüssigkeiten die Additive z.T. verdampfen, wovon dann u.U. Gesundheitsbeeinträchtigungen für die sich dort aufhaltenden Menschen ausgehen können.

Aufgabe der Erfindung ist es, das gattungsgemäß zugrundegelegte Verfahren bzw. die entsprechende Vorrichtung dahingehend zu verbessern, daß zum einen beim Feindrehen von gehärteten Werkstückoberflächen ein Kühlen des Zerspanungsvorganges mittels Kühlflüssigkeit entbehrlich ist, aber gleichwohl die erwähnte Anlaßwirkung vermieden wird oder daß zum anderen beim Feindrehen von noch ungehärteten aber zu härtenden Oberflächen von Werkstücken aus einem härtbaren Stahl ein gesonderter Härtevorgang entbehrlich ist.

Diese Aufgabe wird - ausgehend von dem gattungsgemäß zugrundegelegten Verfahren bzw. der entsprechenden Vorrichtung - erfindungsgemäß durch die kennzeichnenden Merkmale von Anspruch 1 für das Verfahren bzw. von Anspruch 3 für die Vorrichtung gelöst. Durch die Erfindung wird der zerspanungsbedingte, kleinflächige und nur sehr kurz anhaltende Wärmeeintrag ausgenutzt und aufbauend auf ihm der Wärmeeintrag durch Laserstrahleinwirkung bis zur Umwandlungstemperatur gesteigert; es kommt dann anschließend aufgrund einer Selbstabschreckung zur Ausbildung eines geordneten und definierten Härtegefüges. Beim Feindrehen bereits gehärteter Werkstückpartien wird durch die erfindungsgemäße Wärmebehandlung die Anlaßwirkung des zerspanungsbedingten Wärmeeintrages kompensiert und beim Feindrehen noch nicht gehärteter aber zu härtender Oberflächenpartien wird während der Zerspanungszeit die bearbeitete Oberfäche zugleich auch gehärtet. Es können auch Oberflächenpartien von Drehteilen, die nicht zerspanend bearbeitet zu werden brauchen, gehärtet werden, indem der Zerspanungsmeißel dort außer Eingriff gebracht aber in dichtem Abstand bei eingeschaltetem Laserstrahl und bei umlaufendem Werkstück an der zu härtenden Oberfläche entlanggeführt wird. Desweiteren ist es auch möglich, die - zerspanend oder nicht-spanend - vom Meißel überstrichene Werkstückoberfläche örtlich nur partiell zu härten, indem der Laserstrahl unterbrochen wird. Und zwar ist auf diese Weise nicht nur eine axiale Unterbrechung der Härtezone realisierbar, sondern durch eine drehwinkelabhängige, umlaufsynchrone Strahlunterbrechung können auch gezielt bestimmte Umfangsbereiche beim Härten ausgespart werden.

Zwar ist es aus der DE 42 33 035 C1 bekannt, in einen Zerspanungsmeißel ein Beobachtungsfenster zu integrieren, welches - je nach Anwendungsfall - auf der Spanfläche oder auf der Freifläche angeordnet sein kann. Dort geht es jedoch lediglich um das Einfangen und thermograpische Auswerten einer vom Werkstück an der Zerspanungsstelle emittierten Wärmestrahlung.

Es ist ferner der simultane Einsatz eines Laserstrahls an der Zerspanungsstelle beispielsweise beim Drehen bekannt (vgl. z.B. die US-PS 4 229 640 oder B. Wantzen: "Revolution in der Fertigungstechnik - Laserunterstützte Warmzerspanung verhilft neuen Werkstoffen zum Durchbruch" in der Zeitschrift "Transfer", Nr. 9, 1994, Seite 14 bis 16). Dort wird - der Zerspanungsstelle unmittelbar vorauslaufend und in konstanter Relativlage zu ihr - ein Laserstrahl außenseitig auf die noch unbearbeitete Werkstückoberfläche, gewissermaßen in die Spanwurzel, geleitet und dadurch der Werkstoff erweicht, so daß er sich mit geringerem Widerstand zerspanen läßt.

Bei der in der DD 254 348 A1 gezeigten simultanen Anwendung eines Laserstrahles beim Zerspanen ist der Laserstrahl außenseitig auf den bereits abgehobenen Span im Bereich der Spanfläche des Werkzeuges gerichtet. Bei dem Laserstrahl handelt es sich um einen gepulsten Strahl, dessen Einwirkungsstelle den gesamten Spanquerschnitt erfaßt und dessen Energiedichte so hoch ist, daß der Spanwerkstoff an der Einwirkungsstelle während der kurzen Einwirkungszeit verdampft. Dadurch wird der vom Werkstück zusammenhängend ablaufende Span in kurze Abschnitte zerteilt, gewissermaßen granuliert, so daß er rieselfähig ist und die Maschine leicht sauber gehalten werden kann. Es kann nicht zu einer Kneuelbildung aus Spänen und zu Verstopfungen oder gar zu Blockierungen kommen.

Bei den bisher geschilderten, bekannten Lasereinrichtungen wurde der Lasertrahl frei oder in einem geradlinigen Tubus geführt und über Spiegel umgelenkt. Bekannt ist es auch, energiereiche Laserstrahlen in flexiblen Glasfasern zu ihrer Einwirkungsstelle zu leiten (vgl. US-PS'en 4 676 586, 4 799 755 oder 4 681 396).

Keiner der gewürdigten Einrichtungen bzw. Schriften konnte der Fachmann jedoch, und zwar weder einzeln noch bei gemeinsamer Betrachtung, irgendwelche Anregungen im Sinne der hier zugrundeliegenden Aufgabe entnehmen.

Die Vorteile des erfindungsgemäßen Verfahrens bzw. der Vorrichtung liegen in Folgendem:
▷ Vermeidung einer unkontrollierten Anlaßwirkung beim trockenen Hartfeindrehen.
▷ Zeitsparendes Oberflächenhärten der Werkstücke zugleich mit dem Schlicht- oder Feinbearbeiten.
▷ Vermeidung von Härteverzügen und von dadurch bedingten Nacharbeitsvorgängen wie Schleifen oder Hartfeindrehen.
▷ Einfaches lokales Härten besimmter örtlich beschränkter Oberflächenpartien durch Zu- oder Abschalten des Laserstrahles während des Werkstückumlaufes.
▷ Auch Härte-"Rampen", d.h. gleitende Übergänge von hartem zu ungehärtetem Werkstoff sind mit dieser Methode auf einfache Weise realisierbar.
▷ Störungsfreies Zuführen des Laserstrahles zur beweglichen Eingriffstelle des Zerspanungsmeißels, und zwar wird der Laserstrahl nicht durch Maschinenteile gestört und umgekehrt wird der Maschinenavlauf nicht durch die Strahlführungselemte beeinträchtigt.

Zweckmäßige Ausgestaltungen der Erfindung können den Unteransprüchen entnommen werden; im übrigen ist die Erfindung anhand eines in der Zeichnung dargestellten Ausführungsbeispieles nachfolgend noch erläutert; dabei zeigen:
- Fig. 1: eine schematische Darstellung eines Feindrehvorganges mit gleichzeitiger Laser-Wärmebehandlung der Werkstückoberfläche unter Ausnutzung der zerspanungsbedingten Kurzzeiterwärmung der Wrerkstückoberfläche unmittelbar hinter der Meißelschneide,
- Fig. 2: eine vergrößerte und isolierte Einzeldarstellung der Meißelschneide - Einzelheit II - aus Figur 1 und
- Fig. 3: eine Anwendung der gleichzeitigen Laser-Wärmebehandlung beim Drehen zum Spanbrechen, die nicht unter den Schutzbereich des Auspruchs 1 fällt.

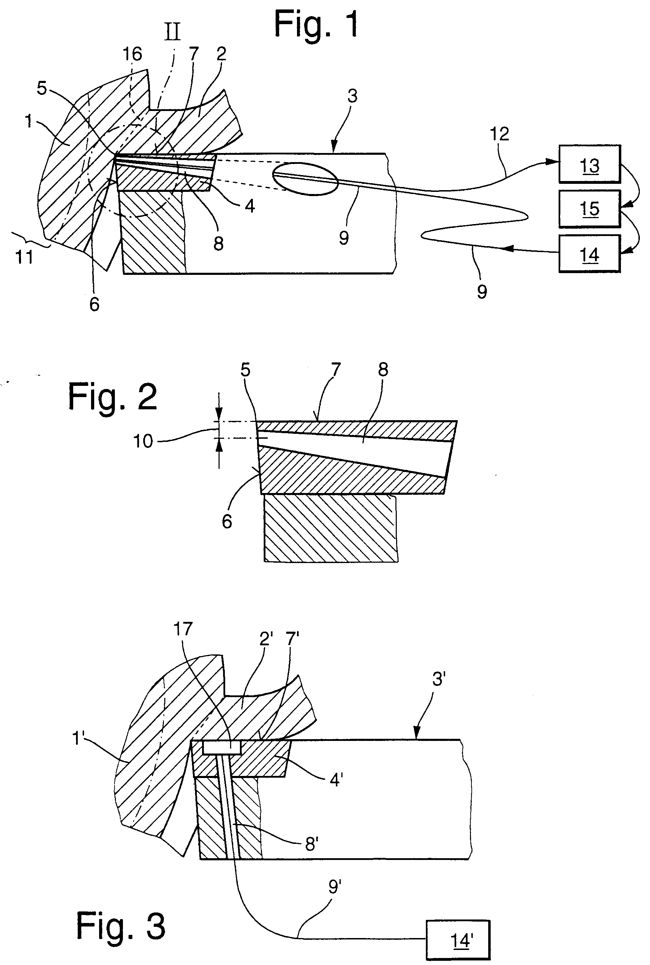

Die Figur 1 zeigt schematisch den Eingriff des Spanmeißels 3 mit seiner Schneide 5 beim Feindrehen eines Werkstückes 1 aus einem härtbaren Stahl, wobei ein Span 2 abgeschält wird. Die Schneide 5 ist an einer Wendeschneidplatte 4 zwischen der dem Werkstück 1 zugekehrt liegenden Freifläche 6 und der Spanfläche 7 ausgebildet, auf der der abgehobene Span 2 entlanggleitet. Im Spanmeißel 3 und - beim dargestellten Ausführungsbeispiel - auch in der Wendeschneidplatte 4 ist ein Kanal 8 integriert, der in der Freifläche 6 etwa 2 bis 3 mm (Maß 10) unterhalb der Schneide 5 ausmündet. Werden dünnere Wendeschneidplatten als im gezeigten Beispiel verwendet, nämlich solche, die dünner als das Maß 10 sind, so kann auf das Anbringen eines Kanales 8 in der Wendeschneidplatte verzichtet werden. In dem meißelintegrierten Kanal verläuft eine Glasfaser 9, die - außerhalb des Spanmeißels 3 - zu einem Laserresonator 14 geführt ist, von wo ein dort erzeugter Laserstrahl dem Werkstück 1 zuführbar ist. In dem meißelintegrierten Kanal ist eine weitere Lichtleitfaser 12 angeordnet, die zu einer Pyrometer-Meßeinrichtung 13 geführt ist, also zu einer Einrichtung, die innerhalb des erfaßten Spots die integrierte Wärmestrahlung mißt. In einer aufwendigeren Anordnung kann stattdessen auch eine Thermographieeinrichtung vorgesehen sein, mit der ein Bild der örtlichten Verteilung der Wärmestrahlung innerhalb des erfaßten Bereiches ermittelbar ist. Mit dieser Anordnung kann die auf der Wekstückoberflache erzeugte Temperatur trägheitsfrei überwacht werden. Mittelbar über eine Steuer- und Regeleinrichtung 15 ist von der Pyrometer-Meßeinrichtung 13 aus der den Laserstrahl erzeugende Laserresonator 14 ansteuerbar. Aufgrund der Integration der Strahlführung im Zerspanungsmeißel mittels Glasfasern 9 bzw. 12 wird der Strahl nicht durch den Bearbeitungsablauf, z.B. Späneflug o.dgl. gestört und auch die Strahlführungsteile beeinträchtigen nicht den Maschinenbetrieb.

Beim Zerspanungsvorgang wird aufgrund der hohen inneren Reibung im Bereich der Scherebene 16 in der Spanwurzel sehr viel Wärme erzeugt, die aufgrund von Wärmeleitung teilweise auch in das Werkstück hineingetragen wird, wobei hierdurch jedoch nur eine oberflächennah liegende, lokal eng auf die unmittelbare Nachbarschaft der Schneide 5 begrenzte Werkstückpartie - und das auch nur sehr kurzzeitig, d.h. vorübergehend - erwärmt wird. Normalerweise wird diese lokale "Blitztemperatur" in kalte, tieferliegende Werkstoffschichten 11 abgeleitet. Unter berücksichtigung der Umlaufgeschwindigkeit des Werkstückes ist die Oberflächentemperatur bereits nach etwa 4 bis 5 mm Abstand von der Schneide 5 bereits sehr stark abgeklungen.

Um zum einen beim Feindrehen von gehärteten Werkstückoberflächen eine Anlaßwirkung auch ohne externes Kühlen zu vermeiden oder um zum anderen beim Feindrehen von noch ungehärteten aber zu härtenden Oberflächen einen gesonderten Härtevorgang entbehrlich zu machen, wird erfindungsgemäß unter Ausnutzung der noch hohen, zerspanungsbedingten Kurzzeiterwärmung der Oberfläche diese lokal weiter erwärmt. Und zwar wird mittels der Glasfaser 9 der Werkstückoberfläche im Bereich unmittelbar hinter der Einwirkungsstelle der Spanmeißelschneide ein Laserstrahl zugeführt. Der auf die Werkstückoberfläche gerichtete Laserstrahl ist in seiner Leistungsdichte an der Einwirkungsstelle so bemessen, daß - unter Berücksichtigung der Relativgeschwindigkeit zwischen Laserstrahl und Werkstückoberfläche - der Werkstoff oberflächennah vorübergehend auf Umwandlungstemperatur des zu zerspanenden Werkstoffes erwärmt wird. Erst anschließend wird der erwärmte Werkstoff durch kalte, tieferliegende Werkstoffvolumina 11 selbstabgeschreckt und das Werkstück dadurch oberflächennah gehärtet. Die Drehzahl des Werkstückes ist dabei so gewählt, daß die Umlaufzeit des Werkstückes kleiner ist als die Zeit für die Selbstabschreckung der oberflächennah auf Umwandlungstemperatur erwärmten Werkstückpartien. Aufgrund dessen kommt es zu einer umfangsmäßig in sich geschlossenen, oberflächennahen Erwärmungszone im Bereich der Einwirkungsstelle der Schneide 5.

Über das weitere Glasfaserkabel 12 wird trägheitsfrei zugleich die Oberflächentemperatur an der Einwirkungsstelle des Laserstrahles thermographisch erfaßt und über dieses Temperatur-Ist-Signal die Leistung des Laserstrahles im Sinne einer Einhaltung der Solltenmperatur geregelt. Zu diesem Zweck ist an die Thermographieeinrichtung 13 eine Steuer- und Regeleinrichtung 15 angeschlossen, von der aus der Laserresonator 14 im Sinne einer Einthaltung der gewünschten und an der Einrichtung 15 einstellbaren, vom Laserstrahl hervorgerufenen Oberflächentemperatur selbsttätig geregelt wird.

Mit dem erfindungsgemäßen Feindrehen mit hauptzeit-simultaner Laser-Wärmebehandlung können nicht nur die spanabhebend bearbeitet Werkstückoberflächen, sondern es können auch nicht zu bearbeitende Oberflächen gehärtet werden, indem der Zerspanungsmeißel dort außer Eingriff gebracht aber in dichtem Abstand an der zu härtenden Oberfläche entlanggeführt wird. Desweiteren ist es auch möglich, die überstrichene Werkstückoberfläche örtlich nur partiell zu härten, indem der Laserstrahl unterbrochen wird. Und zwar ist auf diese Weise nicht nur eine axiale Unterbrechung der Härtezone realisierbar, sondern durch eine drehwinkelabhängige, umlaufsynchrone Strahlunterbrechung können auch gezielt bestimmte Umfangsbereiche beim Härten ausgespart werden.

Bei der in Figur 3 gezeigten Anwendung greift ebenfalls ein Spanmeißel 3' mit seiner an einer Wendeschneidplatte 4' gebildeten Schneide beim Drehen eines Werkstückes 1' in den Werkstoff ein, wobei ebenfalls ein Span 2' abgehoben wird. Im Spanmeißel 3' und in der Wendeschneidplatte 4' ist ein Kanal 8' integriert, der in der Spanfläche 7' ausmündet. Das obere in der Wendeschneidplatte 4' liegende Ende des Kanales 8' ist durch ein durchsichtiges in die Wendeschneidplatte integriertes Fenster 17 z.B. aus Diamant verschlossen, welches jedoch die Laserstrahlung ohne weiteres hindurchtreten läßt. In dem meißelintegrierten Kanal ist eine Glasfaser 9' verlegt, die zu einem Laserresonator 14' geführt ist, von wo ein dort erzeugter Laserstrahl dem abgehobenen Span 2' zuführbar ist, der den gesamten Spanquerschnitt erfaßt. Der Laserstrahl wird gepulst zugeführt und ist in seiner Energiedichte so hoch bemessen, daß es in den kurzen Intervallen der Strahlerzeugung und - zuführung zu einem lokalen Verdampfen des Spanes kommt. Dadurch wird der vom Werkstück 1' zusammenhängend abfließende Span 2' laufend in kurze - in einer Anhäufung rieselfähige - Stücke zerteilt, also gewissermaßen granuliert. Diese Maßnahme ist vor allem bei solchen Werkstoffen und/oder Zerspanungsparametern angezeigt, bei denen ein zur Kneuelbildung neigender Span entsteht. Derartige Spankneuel können einen geordneten Maschinenablauf insbesondere bei automatisiertem Betrieb u.U. empfindlich stören. Die rieselfähig granulierten, trockenen Spanstückchen laufen schwerkraftbedingt leicht ab. In kritischen Fällen lassen sich bestimmte Stellen auch durch pulsierend oder intermittierend zugeführte Druckluft freiblasen, wobei in schwierig gelagerten Fällen sogar eine geordnete Späneabfuhr durch Absaugen bewerkstelligt oder zumindest unterstützt werden kann.

## Patentansprüche

1. Verfahren zum Feindrehen eines Werkstückes aus einem härtbaren Stahl mittels Drehmeißel,
**gekennzeichnet durch** die Gemeinsamkeit folgender Merkmale:
▷ unter Ausnutzung der zerspanungsbedingten Kurzzeiterwärmung einer oberflächennah liegenden, lokal eng auf die unmittelbare Nachbarschaft der Schneide (5) begrenzten Werkstückpartie wird durch einen mit dem Drehmeißel (3) mitbewegten, in einem meißelintegrierten Kanal (8) mittels einer Glasfaser (9) zur Eingriffsstelle der Schneide (5) zugeführten Laserstrahl die Werkstückoberfläche im Bereich unmittelbar hinter der Einwirkungsstelle der Drehmeißelschneide (5) lokal weiter erwärmt,
▷ wobei der auf die Werkstückoberfläche gerichtete Laserstrahl in seiner Leistungsdichte an der Einwirkungsstelle so bemessen ist, daß - unter Berücksichtigung der Relativgeschwindigkeit zwischen Laserstrahl und Werkstückoberfläche - der Werkstoff oberflächennah vorübergehend auf Umwandlungstemperatur des zu zerspanenden Werkstoffes erwärmt wird,
▷ anscbließend wird der erwärmte Werkstoff durch kalte, tieferliegende Werkstoffvolumina (11) selbstabgeschreckt und das Werkstück dadurch oberflächennah gehärtet,
▷ die Drehzahl des Werkstückes (1) beim Feindrehen ist so gewählt, daß die Umlaufzeit des Werkstückes (1) kleiner ist als die Zeit für die Selbstabschreckung der oberflächennah auf Umwandlungstemperatur erwärmten Werkstückpartien.

2. Verfahren nach Anspruch 1,
**dadurch gekennzeichnet**,
daß über ein weiteres, ebenfalls in dem meißelintegrierten Kanal (8) geführten Glasfaserkabel (12) zugleich die Oberflächentemperatur an der Einwirkungsstelle des Laserstrahles pyrometrisch oder thermographisch erfaßt und über dieses Temperatur-Ist-Signal die Leistung des Laserstrahles im Sinne einer Einhaltung der Solltemperatur geregelt wird.

3. Drehmeißel zur Durchführung des Verfahrens nach Anspruch 1 oder 2, wobei der Drehmeißel (3) einen Kanal mit einer werkstückseitigen Öffnung aufweist und in dem Kanal mindestens eine Glasfaser angeordnet ist,
**dadurch gekennzeichnet**,
daß in dem im Drehmeißel (3) integrierten Kanal (8) mittels der Glasfaser (9) ein Laserstrahl zur Freifläche (6) des Drehmeißels (3) in einer Entfernung von etwa 2 bis 3 mm (10) unterhalb der Schneide (5) zuführbar ist, wobei der Laserstrahl in seiner Leistung so bemessen ist, daß - unter Berücksichtigung der Relativgeschwindigkeit zwischen Laserstrahl und Werkstückoberfläche - der Werkstoff oberflächennah vorübergehend auf Umwandlungstemperatur des zu zerspanenden Werkstoffes erwärmbar ist.

4. Drehmeißel nach Anspruch 3,
**dadurch gekennzeichnet**,
daß in dem meißelintegrierten Kanal (8) eine weitere, und zwar zu einer Thermograhpieeinrichtung (13) geführte Lichtleitfaser (12) angeordnet ist, von der aus der den Laserstrahl erzeugende Laserresonator (14) ansteuerbar ist.

## Claims

1. Method for the precision turning of a workpiece made of a heat-treatable steel by means of a turning tool, characterized by the combination of the following features:
• using the temporary heating, resulting from machining, of a workpiece part, which is situated close to the surface and is locally delimited close to the immediate vicinity of the cutter (5), the workpiece surface is heated further locally, in the region directly behind the point of action of the cutter (5) of the turning tool, by means of a laser beam, which moves together with the turning tool (3) and is supplied to the point of action of the cutter (5) in a passage (8), which is integrated in the tool, by means of a glass fibre (9),
• the power density at the point of action of the laser beam, which is directed onto the workpiece surface, being dimensioned such that - taking into account the relative speed between the laser beam and the workpiece surface - the material is temporarily heated close to the surface to the transformation temperature of the material to be machined,
• then the heated material is self-quenched by cold volumes (11) of material which are situated more deeply and as a result the workpiece is hardened close to the surface,
• the rotational speed of the workpiece (1) during the precision turning is selected such that the rotation time of the workpiece (1) is shorter than the time for the self-quenching of those parts of the workpiece which are heated close to the surface to the transformation temperature.

2. Method according to Claim 1, characterized in that the surface temperature at the point of action of the laser beam is simultaneously recorded pyrometrically or thermographically by means of a further glass-fibre cable (12), which is likewise guided in the passage (8) which is integrated in the tool, and by means of this actual temperature signal the power of the laser beam is adjusted so as to maintain the desired temperature.

3. Turning tool for carrying out the method according to Claim 1 or 2, the turning tool (3) having a passage with an opening on the workpiece side and at least one glass fibre being arranged in the passage, characterized in that, by means of the glass fibre (9), a laser beam can be supplied in the passage (8), which is integrated in the turning tool (3), to the surface (6) below the cutting edge of the turning tool (3) at a distance of about 2 to 3 mm (10) beneath the cutter (5), the power of the laser beam being dimensioned such that - taking into account the relative speed between the laser beam and the workpiece surface - the material can be temporarily heated close to the surface to the transformation temperature of the material to be machined.

4. Turning tool according to Claim 3, characterized in that a further optical fibre (12), specifically an optical fibre which is guided to a thermography device (13), is arranged in the passage (8) which is integrated in the tool, from which optical fibre the laser resonator (14) producing the laser beam can be controlled.

## Revendications

1. Procédé pour le tournage de précision pour une pièce à usiner en acier trempant au moyen d'un outil de tournage,
**caractérisé** par l'ensemble des caractéristiques suivantes :
◆ en utilisant le bref réchauffement, provoqué par l'enlèvement du copeau, d'une partie de la pièce à usiner proche de la surface, étroitement limitée localement au voisinage immédiate de l'arête de coupe (5), au moyen d'un faisceau laser entraîné par l'outil de tournage (3) et amené, au moyen d'une fibre optique en verre (9), dans un canal (8) intégré à l'outil, à la position d'intervention de l'arête de coupe (5), on réchauffe davantage localement la surface de la pièce à usiner dans la zone située immédiatement derrière la position d'intervention de l'arête de coupe (5) de l'outil de tournage,
◆ dans lequel on dimensionne, à la position d'intervention, la densité de puissance du faisceau laser orienté sur la surface de la pièce à usiner de façon que - en tenant compte de la vitesse relative du faisceau laser et la surface de la pièce à usiner - on réchauffe temporairement le matériau près de la surface pour l'amener à la température de transformation du matériau à usiner par enlèvement de copeaux,
◆ ensuite, le matériau réchauffé subit un auto-refroidissement brusque du fait des volumes froids, plus profonds, (11) du matériau et la pièce à usiner subit donc une trempe près de la surface,
◆ on choisit la vitesse de rotation de la pièce à usiner (1) lors du tournage de précision de façon que le temps d'une rotation complète d'une pièce à usiner (1) soit inférieur au temps nécessaire pour l'auto-refroidissement brusque des parties de la pièce à usiner proches de la surface, chauffées à la température de transformation.

2. Procédé selon la revendication 1,
caractérisé
◆ par le fait que, au moyen d'une autre fibre optique en verre (12) passant également dans le canal (8) intégré à l'outil, on saisit en même temps par voie pyrométrique ou thermographique, la température de surface à la position d'intervention du faisceau laser et, au moyen de ce signal réel de la température, on régule la puissance du faisceau laser dans le sens du respect de la température prescrite.

3. Outil de tournage pour la mise en oeuvre du procédé selon la revendication 1 ou 2, dans lequel l'outil de tournage (3) présente un canal avec une ouverture située du côté de la pièce à usiner et dans lequel, dans le canal, est disposée au moins une fibre optique en verre,
caractérisé
◆ par le fait que dans le canal (8) intégré dans l'outil de tournage (3), on peut amener au moyen de la fibre en verre (9) un faisceau laser sur la surface en dépouille (6) de l'outil de tournage (3) à une distance de 2 à 3 mm (10) en dessous de l'arête de coupe (5), la puissance du faisceau laser étant dimensionnée de façon que - en tenant compte de la vitesse relative entre le faisceau laser et la surface de la pièce à usiner - le matériau puisse se réchauffer temporairement près de la surface pour arriver à la température de transformation du matériau à usiner.

4. Outil de tournage selon la revendication 3,
caractérisé
◆ par le fait que dans le canal (8) intégré dans l'outil est disposée une autre fibre optique (12), celle-ci guidée jusqu'à un dispositif thermographique (13) à partir duquel le résonateur laser (14) qui produit le faisceau laser peut être commandé.
